# EUROPEAN PATENT SPECIFICATION

(11) **EP 4 607 999 B1**
(45) Date of publication and mention of the grant of the patent: **09.12.2026**
(21) Application number: 22962425.9
(22) Date of filing: 20.10.2022
(51) Int. Cl.: H04W 28/02, H04L 47/34

(54) **COMMUNICATION METHOD AND APPARATUS, AND DEVICE AND STORAGE MEDIUM**
KOMMUNIKATIONSVERFAHREN UND -VORRICHTUNG SOWIE VORRICHTUNG UND SPEICHERMEDIUM
PROCÉDÉ ET APPAREIL DE COMMUNICATION, AINSI QUE DISPOSITIF ET SUPPORT D'ENREGISTREMENT

(43) Date of publication of application: 27.08.2025
(60) Divisional application: 26215372.9
(73) Proprietor: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2022/126534
(87) International publication number: WO 2024/082238

(56) References cited:
- WO-A1-2022/094940
- WO-A1-2022/094940
- WO-A1-2022/165818
- CN-A- 107 046 720
- CN-A- 110 247 742
- CN-A- 110 247 742
- CN-A- 113 839 766
- CN-A- 114 698 029
- CN-A- 114 698 068
- CN-A- 114 698 068
- US-A1- 2020 389 814
- US-A1- 2020 389 814

## Description

### TECHNICAL FIELD

The embodiments of the disclosure relates to a field of communication technology, in particular to communication methods, communication apparatus, devices and a storage medium.

### BACKGROUND

With the continuous development of Wireless Fidelity (Wi-Fi) technology, researchers have proposed the next-generation Wi-Fi technology: Ultra High Reliability (UHR). It aims to improve reliability of Wireless Local Area Networks (WLAN) connectivity, reduce latencies, increase manageability, increase system throughput and reduce the power consumption of the corresponding device.

The UHR technology will continue to make enhancement to the mechanism for transmitting low-latency service data. However, when low-latency service data needs to be transmitted during a process of transmitting consecutively non-low-latency service data within a transmission opportunity (TXOP), there is no conclusion on how to transmit low-latency service data.

WO 2022/09440 A1 provides a communication method and a communication device. The communication method comprises: determining a first message frame, wherein the first message frame comprises information related to a periodic low-latency service, and the information is used to indicate a periodic low-latency service sent by a station; and sending the first message frame.

CN 110247742A provides a communication negotiation method, access hotspot equipment and terminal equipment. The communication negotiation method comprises the steps that the terminal equipment receives a first message sent by the access hotspot equipment, and the first message comprises indication information; and the terminal equipment determines the maximum length of the aggregation of the MPDU and the number of the PPDUs using the burst mode to send the physical layer convergence protocol layer protocol data units according to the indication information, and aggregates the MPDU according to the maximum length aggregated by the MPDU.

US 2020/389814 A1 discloses a wireless local area network data transmission method and apparatus, which are used for improving data transmission efficiency. The method includes: generating, by an access point (AP), a physical layer protocol data unit (PPDU) of a wireless local area network, wherein the PPDU comprises a Physical Layer Convergence Protocol (PLCP) header domain and a data domain, wherein the PLCP header domain comprises a preamble and a control domain, and the control domain carries duration information, wherein the duration information is used for network allocation vector (NAV) setting and protecting transmission of subsequent one or more PPDUs after the generated PPDU in a transmission opportunity (TXOP), and a duration indicated by the duration information includes transmission time of the subsequent one or more PPDUs after the generated PPDU in the TXOP; and sending, by the AP, the generated PPDU.

CN 114698068 A relates to the technical field of wireless fidelity WIFI, in particular to a service transmission method, device and system. In the method, an access point generates and sends a broadcast frame, the broadcast frame comprises information of a first transmission time and an identifier of a first low-delay service, the first transmission time is used for transmission of the first low-delay service, and the first low-delay service is a low-delay service of at least one first terminal. After the terminal receives the broadcast frame, if the service of the terminal comprises the first low-delay service, the terminal transmits the first low-delay service within the first transmission time; and if the service of the terminal does not comprise the first low-delay service, the terminal stops channel competition within the first transmission time.

WO 2022/165818 A1 provides a wireless communication method, a station device, and an access point device, to ensure that other stations in a basic service set (BSS) do not affect a station supporting a low-latency service to perform timely frame switching within a specified service period (SP). The wireless communication method comprises that the station device determines, according to frame switching allowed within a target duration before a start point of a next low-latency service period in the BSS, whether to send a physical protocol data unit (PPDU) when obtaining a transmission opportunity or within the obtained transmission opportunity.

### SUMMARY

The invention provide communication methods, communication apparatuses, and a storage medium according to the independent claims, which serve to provide a low-latency service data transmission mode. Advantageous embodiments are the subject matter of the dependent claims.

According to a first aspect of the invention, a communication method comprising the features of claim 1 is provided

According to a second aspect of the invention, a communication method comprising the features of claim 6 is provided.

According to a third aspect of the invention, a communication apparatus comprising the features of claim 11 is provided.

According to a fourth aspect of the invention, a communication apparatus comprising the features of claim 12 is provided.

According to a further aspect of the invention, a computer-readable storage medium is comprising the features of claim 13 provided. The computer-readable storage medium stores a computer program, and when the computer program is executed by a processor, any communication method provided in the embodiments of the disclosure is implemented.

**In** the embodiment of the disclosure, a low-latency service data transmission mode is provided to transmit low-latency service data during a process of consecutive transmission of non-low-latency service data within a TXOP.

Additional aspects and advantages of embodiments of disclosure will be given in part in the following description, become apparent in part from the following description, or be learned from the practice of the disclosure.

### BRIEF DESCRIPTION OF THE DRAWINGS

**In** order to clearly illustrate technical solutions of embodiments of the disclosure, a brief description of drawings used in the embodiments of the disclosure is given below. Obviously, the drawings in the following description are only part of the embodiments of the disclosure, and for those skilled in the art, other drawings can be obtained according to these drawings without inventive works.
FIG. 1 is a flowchart of a communication method provided by an embodiment of the disclosure.
FIG. 2 is a flowchart of another communication method provided by an embodiment of the disclosure.
FIG. 3 is a schematic diagram of a communication apparatus provided by an embodiment of the disclosure.
FIG. 4 is a schematic diagram of another communication apparatus provided by an embodiment of the disclosure.
FIG. 5 is a schematic diagram of an electronic device provided by an embodiment of the disclosure.

### DETAILED DESCRIPTION

In the embodiments of the disclosure, the term "and/or" describes an association relationship of associated objects, which indicates that three relationships may exist. For example, "A and/or B" indicates three relationships: A exists alone, A and B both exist, or B exists alone. The character "/" generally indicates that the associated objects prior to and after the character "/" are in an "or" relationship.

The term "plurality" in the embodiments of the disclosure refers to two or more, and other quantifiers are similar thereto.

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the disclosure. Instead, they are merely examples of apparatuses and methods consistent with aspects related to the disclosure as recited in the appended claims.

The terms used in the disclosure are only for the purpose of describing specific embodiments, and are not intended to limit the disclosure. The singular forms of "a" and "the" used in the disclosure and appended claims are also intended to include plural forms, unless the context clearly indicates other meanings. It is understandable that the term "and/or" as used herein refers to and includes any or all possible combinations of one or more associated listed items.

It is understandable that although the terms "first", "second", and "third" may be used in the disclosure to describe various types of information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein may be interpreted as "when", "upon" or "in response to determining".

The technical solutions in the embodiments of the disclosure will be clearly and completely described below in combination with the drawings in the embodiments of the disclosure. Obviously, the described embodiments are only part of the embodiments of the disclosure, not all of the embodiments. Based on the embodiments in the disclosure, all other embodiments obtained by those skilled in the field without inventive works shall fall within the scope of protection of the disclosure.

The method and the apparatus are based on the same disclosed concept. Because the principle of solving problems is similar, the implementations of the device and the apparatus can be referred to each other, which will not be repeated herein.

The AP may be a wireless switch for a wireless network, as well as an access device for the wireless network. The AP may include a software application and/or a circuitry to enable other types of nodes in the wireless network to communicate with the outside and inside of the wireless network through the AP. As an example, the AP may be a terminal or a network device equipped with a Wi-Fi chip.

The AP and the STA may include, but are not limited to: cellular phones, smart phones, wearable devices, computers, personal digital assistants (PDAs), personal communication systems (PCSs), personal information managers (PIMs), personal navigation devices (PNDs), global positioning systems, multimedia devices, Internet of Things (IoT) devices, etc.

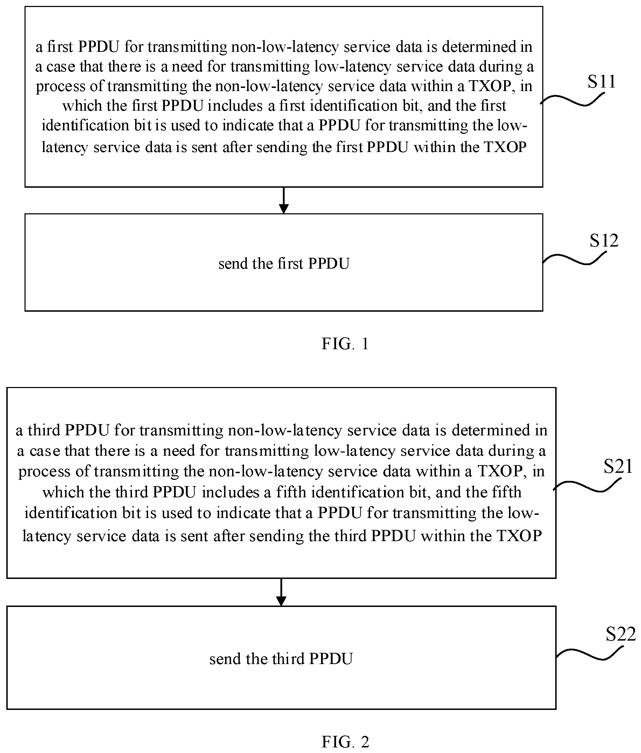

A communication method is provided by an embodiment of the disclosure. FIG. 1 is a flowchart of a communication method provided by an embodiment of the disclosure.

Optionally, the method is applied to an AP. The method may include the following steps.

At step S11, a first PPDU for transmitting non-low-latency service data is determined in a case that there is a need for transmitting low-latency service data during a process of transmitting the non-low-latency service data within a transmission opportunity (TXOP), in which the first PPDU includes a first identification bit, and the first identification bit is used to indicate that a PPDU for transmitting the low-latency service data is sent after sending the first PPDU within the TXOP.

The AP may pre-acquire a TXOP and transmit non-low-latency service data over consecutive PPDUs within the TXOP.

When there is a need for the AP to transmit low-latency service data, at the moment when the need for transmitting the low-latency service data is determined, the PPDU to be sent for transmitting the non-low-latency service data within the TXOP is determined as the first PPDU. The first PPDU includes a first identification bit, and the first identification bit is used to indicate that a PPDU for transmitting the low-latency service data is sent after sending the first PPDU within the TXOP. That is, the first identification bit is used to indicate that the AP needs to preempt the next channel used for transmitting the non-low-latency service data in order to transmit the low-latency service data.

That is, the AP, when transmit the non-low-latency service data over consecutive PPDUs within the TXOP, determines the PPDU to be sent for transmitting the non-low-latency service data as the first PPDU. The first PPDU includes a first identification bit to indicate that a PPDU for transmitting the low-latency service data continuous to be sent after the first PPDU is sent within the TXOP.

At step S12, the first PPDU is sent.

After determining the first PPDU, the AP may send the first PPDU.

In the communication method applied to the AP provided by the disclosure, the low-latency service data transmitted after sending the first PPDU may be non-periodic low-latency service data or instantaneous low-latency service data, i.e., low-latency service data that is instantaneously required to be transmitted during the transmission of non-low-latency service data.

The low-latency service data may specifically be service data whose transmission latency does not exceed a certain threshold. The threshold may be, for example, 10ms or other thresholds less than 10ms, which is not limited herein.

In the communication method applied to the AP provided by the disclosure, the first identification bit in the first PPDU is located in a physical layer (PHY) preamble of the first PPDU, or in a Medium Access Control (MAC) header of the first PPDU, which is not limited here.

In the communication method applied to the AP provided by the disclosure, the method further includes:
sending consecutively at least one second PPDU after sending the first PPDU within the TXOP, in which each second PPDU is used for transmitting the low-latency service data.

During the process of sending consecutive PPDUs for transmitting the non-low-latency service data within the TXOP, the AP determines and sends the first PPDU in response to a need for transmitting low-latency service data. After sending the first PPDU, it sends consecutively at least one second PPDU for transmitting the low-latency service data. That is, during the process of sending consecutive PPDUs for transmitting the non-low-latency service data within the TXOP, in response to a need for transmitting low-latency service data, the transmission of non-low-latency service data is interrupted after sending the first PPDU, and the next channel is preempted to transmit the low-latency service data via the at least one second PPDU.

The number of the second PPDU is specifically determined according to an amount of data of the low-latency service data to be transmitted.

That is, after the AP indicates to send the first PPDU within the TXOP through the first identification bit in the first message frame, it consecutively sends at least one second PPDU to transmit the low-latency service data.

In the communication method applied to the AP provided by the disclosure, each second PPDU includes a second identification bit, and the second identification bit of each second PPDU except the last one of the at least one second PPDU indicates, by a first value, that a next second PPDU is used for transmitting the low-latency service data, and the second identification bit of the last one of the at least one second PPDU indicates, by a second value, that no PPDU for transmitting the low-latency service data is sent within the TXOP.

The AP continues to send at least one second PPDU for transmitting the low-latency service data after sending the first PPDU within the TXOP. In a case that there is still a need to transmit the low-latency service data after sending every first one of the at least one second PPDU, the AP sets the value of the second identification bit of the second PPDU to a first value to indicate by the first value that the next second PPDU sent is used for transmitting the low-latency service data, and continues to send the second PPDU for transmitting the low-latency service data after sending the second PPDU.

In a case that there is no need to transmit the low-latency service data after the second PPDU is sent, the AP may set the value of the second identification bit of the second PPDU to a second value to indicate by the second value that no PPDU is sent for transmitting low-latency service data within the TXOP, that is, to indicate that the transmission of low-latency service data is completed.

If the AP does not complete the transmission of low-latency service data within the TXOP, it will continue to send the second PPDU for transmitting low-latency service data within the next TXOP at the beginning of the next TXOP.

The first value and the second value of the second identification bit are determined as needed. For example, the first value may be 1, and the second value may be 0, which is not limited herein.

In the communication method applied to the AP provided by the disclosure, the second identification bit in each second PPDU is located in a PHY preamble of the corresponding second PPDU or in a MAC header of the corresponding second PPDU, which is not limited here.

If the second identification bit of the second PPDU is located in the MAC header of the corresponding second PPDU, the second identification bit is located in a more data field in the MAC header. That is, the more data field in the MAC header of each second PPDU is the second identification bit.

In the communication method applied to the AP provided by the disclosure, the AP sends consecutively at least one second PPDU within the TXOP, and a sequence number (SN) of each second PPDU except the first one of the at least one second PPDU is a SN of a previous second PPDU plus 1, and a SN of the first one of the at least one second PPDU is 1.

The SN of each second PPDU is used to identify the ordinal position of the corresponding PPDU in the sequence of PPDUs sent by the AP for transmitting the low-latency service data.

In the communication method applied to the AP provided by the disclosure, the last one of the at least one second PPDU sent by the AP also includes a third identification bit. The third identification bit indicates by the third value that a PPDU for transmitting the non-low-latency service data is sent after sending the last one of the at least one second PPDU, or the third identification bit indicates by a fourth value that no PPDU for transmitting service data is sent after sending the last one of the at least one second PPDU within the TXOP.

During the process of sending PPDUs for transmitting the non-low-latency service data within the TXOP, in a case that low-latency service data needs to be transmitted, the AP occupies the TXOP and transmits the low-latency service data via at least one contiguous second PPDU after sending the first PPDU for transmitting the non-low-latency service data. In a case that the occupied TXOP still has time remaining to send at least one PPDU for transmitting the non-low-latency service data after sending all second PPDUs, that is, after sending the last one of the at least one second PPDU for transmitting the low-latency service data, the value of the third identification bit of the last one of the at least one second PPDU is set to the third value to indicate that the PPDU for transmitting the non-low-latency service data continue to be sent after sending the last one of the at least one second PPDU in the TXOP.

In a case that the occupied TXOP is consumed after all second PPDUs have been sent, i.e., after the last one of the at least one second PPDU for transmitting the low-latency service data has been sent, or if the remaining time in the occupied TXOP does not allow for the sending of at least one PPDU for transmitting the non-low-latency service data, the value of the third identification bit of the last one of the at least one second PPDU is set to the fourth value to indicate that no PPDU for transmitting service data is sent within the TXOP.

The third value and the fourth value of the third identification bit are determined as needed. For example, the third value may be 1, and the fourth value may be 0, which is not limited herein.

In the communication method applied to the AP provided by the disclosure, the third identification bit in the last one of the at least one second PPDU is located in a PHY preamble of the last one of the at least one second PPDU or in a MAC header of the last one of the at least one second PPDU, which is not limited here.

In the communication method applied to the AP provided by the disclosure, each second PPDU also includes a fourth identification bit, and the fourth identification bit is used to indicate a remaining transmission time for the low-latency service data.

The remaining transmission time indicated by corresponding fourth identification bit includes a transmission time of all second PPDUs starting from a corresponding second PPDU and a transmission time of Acknowledgement (ACK) frames corresponding to all second PPDUs starting from the corresponding second PPDU.

After every second PPDU sent by the AP, it receives a corresponding ACK frame to indicate that a service data receiver received the corresponding second PPDU.

As an example, for the first one of the at least one second PPDU sent by the AP, the remaining transmission time for the low-latency service data indicated by the fourth identification bit of the first one of the at least one second PPDU includes a transmission time for sending all second PPDUs to the service data receiver and a transmission time for ACK frames sent by the service data receiver for each second PPDU.

Optionally, the remaining transmission time indicated by each fourth identification bit includes a transmission time of all second PPDUs starting from the corresponding second PPDU and a transmission time of a Block Acknowledgement (BA) frame corresponding to all second PPDUs.

The AP receives a BA frame after sending all second PPDUs, which is used to indicate that the service data receiver has received all second PPDUs.

As an example, for the last one of the at least one second PPDU sent by the AP, the remaining transmission time of the low-latency service data indicated by the fourth identification bit of the last one of the at least second PPDU includes a transmission time for sending the last one of the at least one second PPDU to the service data receiver and a transmission time for a BA frame sent by the service data receiver for all second PPDUs.

In the communication method applied to the AP provided by the disclosure, the fourth identification bit in each second PPDU may be a duration field or other information fields in a MAC header of the corresponding second PPDU, which is not limited here.

In the communication method applied to the AP provided by the disclosure, if the AP continues to send a PPDU for transmitting the non-low-latency service data in the TXOP after sending the second PPDU for transmitting the low-latency service data within the TXOP, a SN of the first one of PPDUs for transmitting the non-low-latency service data sent after the last one of the at least one second PPDU is the SN of the first PPDU plus 1.

The AP adds 1 to the SN of the first PPDU as the SN of the first one of PPDUs for transmitting the non-low-latency service data sent after the last one of the at least one second PPDU, to indicate that the non-low-latency service data transmitted by the first PPDU sent after sending all second PPDUs within the TXOP is a continuity of the non-low-latency service data transmitted by the first PPDU.

Based on this, after transmitting the low-latency service data via at least one second PPDU during the process of transmitting the non-low-latency service data via consecutive PPDUs within the TXOP, the AP may continue to transmit the remaining non-low-latency service data after completing the transmission of the low-latency service data.

A communication method is provided by an embodiment of the disclosure. FIG. 2 is a flowchart of a communication method provided by an embodiment of the disclosure.

Optionally, the method is applied to a STA. The method includes the following steps.

At step S21, a third PPDU for transmitting non-low-latency service data is determined in a case that there is a need for transmitting low-latency service data during a process of transmitting the non-low-latency service data within a TXOP, in which the third PPDU includes a fifth identification bit, and the fifth identification bit is used to indicate that a PPDU for transmitting the low-latency service data is sent after sending the third PPDU within the TXOP.

The STA may pre-acquire a TXOP and transmit the non-low-latency service data via consecutive PPDUs within the TXOP.

In response to a need for transmitting the low-latency service data, the STA determines the PPDU to be sent in the TXOP for transmitting the non-low-latency service data as the third PPDU at the moment when it is determined that the low-latency service data needs to be transmitted.

The third PPDU includes a fifth identification bit, the fifth identification bit is used to indicate that a PPDU for transmitting the low-latency service data is sent after sending the third PPDU within the TXOP. That is, it is used to indicate that the AP needs to preempt the next channel for transmitting the non-low-latency service data to transmit the low-latency service data.

That is, when the STA transmits the non-low-latency service data via consecutive PPDUs in the TXOP, it determines the PPD sent for transmitting the non-low-latency service data as the third PPDU. The third PPDU includes a fifth identification bit, which is used to indicate that a PPDU for transmitting the low-latency service data continues to be sent after the third PPDU is sent within the TXOP.

At step S21, the third PPDU is sent.

After determining the third PPDU, the STA may send the third PPDU.

In the communication method applied to the STA provided by the disclosure, the low-latency service data transmitted after sending the third PPDU may be non-periodic low-latency service data or instantaneous low-latency service data, i.e., low-latency service data that is instantaneously required to be transmitted during the transmission of non-low-latency service data.

The low-latency service data may specifically be service data whose transmission latency does not exceed a certain threshold. The threshold may be, for example, 10ms or other thresholds less than 10ms, which is not limited herein.

In the communication method applied to the STA provided by the disclosure, the fifth identification bit in the third PPDU is located in a PHY preamble of the third PPDU, or in a MAC header of the third PPDU, which is not limited here.

In the communication method applied to the STA provided by the disclosure, the method further includes:

consecutively sending at least one fourth PPDU after sending the third PPDU within the TXOP, in which each fourth PPDU is used for transmitting the low-latency service data.

During the process of sending consecutive PPDUs for transmitting the non-low-latency service data within the TXOP, the STA determines and sends the third PPDU in response to a need for transmitting low-latency service data. After sending the third PPDU, it sends consecutively at least one fourth PPDU for transmitting the low-latency service data. That is, during the process of sending consecutive PPDUs for transmitting the non-low-latency service data within the TXOP, in response to a need for transmitting low-latency service data, the transmission of non-low-latency service data is interrupted after sending the third PPDU, and the next channel is preempted to transmit low-latency service data via the at least one fourth PPDU.

That is, after the STA indicates to send the third PPDU within the TXOP through the fifth identification bit in the first message frame, it consecutively sends at least one fourth PPDU to transmit the low-latency service data.

In the communication method applied to the STA provided by the disclosure, each fourth PPDU includes a sixth identification bit, and the sixth identification bit of each fourth PPDU except the last one of the at least one fourth PPDU indicates by a fifth value that a next fourth PPDU is used for transmitting the low-latency service data, and the sixth identification bit of the last one of the at least one fourth PPDU indicates by a sixth value that no PPDU for transmitting the low-latency service data is sent within the TXOP.

The STA continues to send at least one fourth PPDU for transmitting the low-latency service data after sending the third PPDU within the TXOP. In a case that there is still a need to transmit the low-latency service data after every first one of the at least one fourth PPDU is sent, the STA sets the value of the sixth identification bit of the fourth PPDU to a fifth value to indicate by the fifth value that the next fourth PPDU sent is used for transmitting the low-latency service data, and continues to send the fourth PPDU for transmitting the low-latency service data after sending the fourth PPDU.

In a case that there is no need to transmit the low-latency service data after the fourth PPDU is sent, the STA may set the value of the sixth identification bit of the fourth PPDU to a sixth value to indicate by the sixth value that no PPDU for transmitting the low-latency service data is sent within the TXOP, that is, to indicate that the transmission of low-latency service data is completed.

If the STA does not complete the transmission of low-latency service data within the TXOP, it will continue to send the fourth PPDU for transmitting low-latency service data within the next TXOP at the beginning of the next TXOP.

The fifth value and the sixth value of the sixth identification bit are determined as needed. For example, the fifth value may be 1, and the sixth value may be 0, which is not limited herein.

In the communication method applied to the STA provided by the disclosure, the sixth identification bit in each fourth PPDU is located in a PHY preamble of the corresponding fourth PPDU or in a MAC header of the corresponding fourth PPDU, which is not limited here.

If the sixth identification bit of the fourth PPDU is located in the MAC header of the corresponding fourth PPDU, the sixth identification bit is located in a more data field in the MAC header. That is, the more data field in the MAC header of each fourth PPDU is the sixth identification bit.

In the communication method applied to the STA provided by the disclosure, the STA consecutively sends at least one fourth PPDU within the TXOP, and a SN of each fourth PPDU except the first one of the at least one fourth PPDU is a SN of a previous fourth PPDU plus 1, and a SN of the first one of the at least one fourth PPDU is 1.

The SN of each fourth PPDU is used to identify the ordinal position of the corresponding PPDU in the sequence of PPDUs sent by the STA for transmitting the low-latency service data.

In the communication method applied to the STA provided by the disclosure, the last one of the at least one fourth PPDU sent by the STA also includes a seventh identification bit. The seventh identification bit indicates by a seventh value that a PPDU for transmitting the non-low-latency service data will be sent after sending the last one of the at least one fourth PPDU, or the seventh identification bit indicate by an eighth value that no PPDU for transmitting service data will be sent after sending the last one of the at least one fourth PPDU within the TXOP.

During the process of sending PPDUs for transmitting the non-low-latency service data within the TXOP, in a case that low-latency service data needs to be transmitted, the STA occupies the TXOP and transmits the low-latency service data via at least one consecutive fourth PPDU after sending the third PPDU for transmitting the non-low-latency service data. In a case that the occupied TXOP still has time remaining to send at least one PPDU for transmitting the non-low-latency service data after sending all fourth PPDUs, that is, after sending the last one of the at least one fourth PPDU for transmitting the low-latency service data, the value of the seventh identification bit of the last one of the at least one fourth PPDU is set to the seventh value to indicate that the PPDU for transmitting the non-low-latency service data continues to be sent after sending the last one of the at least one fourth PPDU in the TXOP.

In a case that the occupied TXOP is consumed after all fourth PPDUs have been sent, i.e., after the last one of the at least one fourth PPDU for transmitting the low-latency service data has been sent, or in a case that the remaining time in the occupied TXOP does not allow for sending at least one PPDU for transmitting the non-low-latency service data, the value of the seventh identification bit of the last one of the at least one fourth PPDU is set to the eighth value to indicate that no PPDU for transmitting service data is to be sent within the TXOP.

The seventh value and the eighth value of the seventh identification bit are determined as needed. For example, the seventh value may be 1, and the eighth value may be 0, which is not limited herein.

In the communication method applied to the STA provided by the disclosure, the seventh identification bit in the last one of the at least one fourth PPDU is located in a PHY preamble of the last one of the at least one fourth PPDU or in a MAC header of the last one of the at least one fourth PPDU, which is not limited here.

In the communication method applied to the STA provided by the disclosure, each fourth PPDU also includes an eighth identification bit, and the eighth identification bit is used to indicate a remaining transmission time for the low-latency service data.

The remaining transmission time indicated by corresponding eighth identification bit includes a transmission time of all fourth PPDUs starting from a corresponding fourth PPDU and a transmission time of ACK frames corresponding to the all fourth PPDUs starting from the corresponding fourth PPDU.

After every fourth PPDU sent by the STA, it receives a corresponding ACK frame to indicate that a service data receiver received the corresponding fourth PPDU.

As an example, for the first one of the at least one fourth PPDU sent by the STA, the remaining transmission time for the low-latency service data indicated by the eighth identification bit of the first one of at least one fourth PPDU includes a transmission time for sending all fourth PPDUs to the service data receiver and a transmission time of ACK frames sent by the service data receiver for each fourth PPDU.

Optionally, the remaining transmission time indicated by each eighth identification bit includes a transmission time of all fourth PPDUs starting from the corresponding fourth PPDU and a transmission time of a BA frame corresponding to all fourth PPDUs.

The STA receives a BA frame after sending all fourth PPDUs, which is used to indicate that the service data receiver has received all fourth PPDUs.

As an example, for the last one of the at least one fourth PPDU sent by the STA, the remaining transmission time of the low-latency service data indicated by the eighth identification bit of the last one of the at least one fourth PPDU includes a transmission time for sending the last one of the at least one fourth PPDU to the service data receiver and a transmission time for a BA frame sent by the service data receiver for all fourth PPDUs.

In the communication method applied to the STA provided by the disclosure, the eighth identification bit in each fourth PPDU may be a duration field or other information fields in a MAC header of the corresponding fourth PPDU, which is not limited here.

In the communication method applied to the STA provided by the disclosure, if the STA continues to send a PPDU for transmitting the non-low-latency service data in the TXOP after sending the fourth PPDU for transmitting the low-latency service data within the TXOP, a SN of the first one of PPDUs for transmitting the non-low-latency service data sent after the last one of the at least one fourth PPDU is the SN of the third PPDU plus 1.

The STA adds 1 to the SN of the third PPDU as the SN of the first one of the PPDUs for transmitting the non-low-latency service data after the last one of the at least one fourth PPDU, to indicate that the non-low-latency service data transmitted by the third PPDU sent after sending all fourth PPDUs are transmitted within the TXOP is a continuity of the non-low-latency service data transmitted by the third PPDU.

Based on this, after transmitting the low-latency service data via at least one fourth PPDU during the process of transmitting the non-low-latency service data via consecutive PPDUs within the TXOP, the STA may continue to transmit the remaining non-low-latency service data after completing the transmission of the low-latency service data.

An embodiment of the disclosure provides a low-latency service data transmission mode during the process of transmitting consecutively non-low-latency service data in one TXOP to transmit aperiodic low-latency service data or instantaneous low-latency service data.

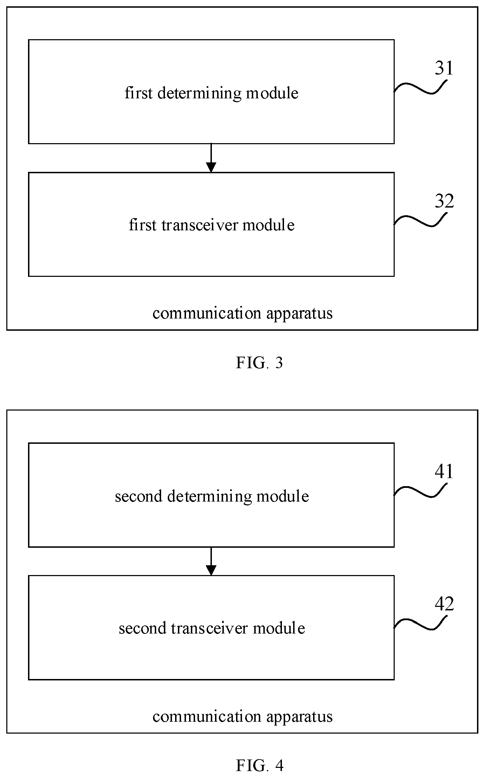

As illustrated in FIG. 3, the embodiment of the disclosure provides a communication apparatus. The communication apparatus includes:
a first determining module 31, configured to determine a first PPDU for transmitting non-low-latency service data in a case that there is a need for transmitting low-latency service data during a process of transmitting non-low-latency service data within a TXOP, in which the first PPDU includes a first identification bit, and the first identification bit is used to indicate that a PPDU for transmitting the low-latency service data is sent after sending the first PPDU within the TXOP; and
a first transceiver module 32, configured to send the first PPDU.

Optionally, in the embodiment of the disclosure, the first transceiver module 32 is further configured to:
send consecutively at least one second PPDU after sending the first PPDU within the TXOP, in which each second PPDU is used for transmitting the low-latency service data.

Optionally, in the embodiment of the disclosure, each second PPDU includes a second identification bit, and the second identification bit of each second PPDU except the last one of the at least of second PPDU indicates by a first value that a next second PPDU is used for transmitting the low-latency service data, and the second identification bit of the last one of the at least one second PPDU indicates by a second value that no PPDU for transmitting the low-latency service data is sent within the TXOP.

Optionally, in the embodiment of the disclosure, a SN of each second PPDU except the first one of the at least one second PPDU is a SN of a previous second PPDU plus 1, and a SN of the first one of the at least one second PPDU is 1.

Optionally, in the embodiment of the disclosure, the last one of the at least one second PPDU includes a third identification bit, the third identification bit indicates by a third value that a PPDU for transmitting the non-low-latency service data is sent after sending the last one of the at least one second PPDU, or the third identification bit indicates by a fourth value that no PPDU for transmitting service data is sent after sending the last one of the at least one second PPDU within the TXOP.

Optionally, in the embodiment of the disclosure, the first identification bit, the second identification bit and the third identification bit are located in a PHY preamble or a MAC header, and the second identification bit is located in a more data field if the second identification bit is located in the MAC header.

Optionally, in the embodiment of the disclosure, each second PPDU includes a fourth identification bit, each fourth identification bit is used to indicate a remaining transmission time for the low-latency service data, and the remaining transmission time indicated by the fourth identification bit includes a transmission time of all second PPDUs starting from a corresponding second PPDU and a transmission time of all ACK frames corresponding to the second PPDU starting from the corresponding second PPDU, or the remaining transmission time includes a transmission time of all second PPDUs starting from the corresponding second PPDU and a transmission time of a BA frame corresponding to all second PPDUs.

Optionally, in the embodiment of the disclosure, the fourth identification bit is a duration field in a MAC header.

Optionally, in the embodiment of the disclosure, a SN of the first one of PPDUs for transmitting the non-low-latency service data after sending the last one of the at least one second PPDU is a SN of the first PPDU plus 1.

As illustrated in FIG. 4, the embodiment of the disclosure provides a communication apparatus. The communication apparatus includes:
a second determining module 41, configured to determine a third PPDU for transmitting non-low-latency service data in a case that there is a need for transmitting low-latency service data during a process of transmitting non-low-latency service data within a TXOP,, in which the third PPDU includes a fifth identification bit, and the fifth identification bit is used to indicate that a PPDU for transmitting the low-latency service data is sent after sending the third PPDU within the TXOP; and
a second transceiver module 42, configured to send the third PPDU.

Optionally, in the embodiment of the disclosure, the second transceiver module 42 is further configured to:
continue to send at least one fourth PPDU after sending the third PPDU within the TXOP, in which each fourth PPDU is used for transmitting the low-latency service data.

Optionally, in the embodiment of the disclosure, each fourth PPDU includes a sixth identification bit, and the sixth identification bit of each fourth PPDU except the last one of at least one fourth PPDU indicates by a fifth value that a next fourth PPDU is used for transmitting the low-latency service data, and the sixth identification bit of the last one of the at least one fourth PPDU indicates by a sixth value that no PPDU for transmitting the low-latency service data is sent within the TXOP.

Optionally, in the embodiment of the disclosure, a SN of each fourth PPDU except the first one of the at least one fourth PPDU is a SN of a previous fourth PPDU plus 1, and a SN of the first one of the at least one fourth PPDU is 1.

Optionally, in the embodiment of the disclosure, the last one of at least one fourth PPDU includes a seventh identification bit, the seventh identification bit indicates by a seventh value that a PPDU for transmitting the non-low-latency service data will be sent after sending the last one of the at least one fourth PPDU, or the seventh identification bit indicates by an eighth value that no PPDU for transmitting service data is sent after sending the last one of the at least one fourth PPDU within the TXOP.

Optionally, in the embodiment of the disclosure, the fifth identification bit, the sixth identification bit and the seventh identification bit are located in a PHY preamble or a MAC header, and the sixth identification bit is located in a more data field in case that the sixth identification bit is located in the MAC header.

Optionally, in the embodiment of the disclosure, each fourth PPDU includes an eighth identification bit, each eighth identification bit is used to indicate a remaining transmission time for the low-latency service data, and the remaining transmission time indicated by the eighth identification bit includes a transmission time of all fourth PPDUs starting from a corresponding fourth PPDU and a transmission time of all ACK frames corresponding to the fourth PPDU starting from the corresponding fourth PPDU, or the remaining transmission time includes a transmission time of all fourth PPDUs starting from the corresponding fourth PPDU and a transmission time of a BA frame corresponding to all fourth PPDUs.

Optionally, in the embodiment of the disclosure, the eighth identification bit is a duration field in a MAC header.

Optionally, in the embodiment of the disclosure, a SN of the first one of PPDUs for transmitting the non-low-latency service data after sending the last one of the at least one fourth PPDU is a SN of the third PPDU plus 1.

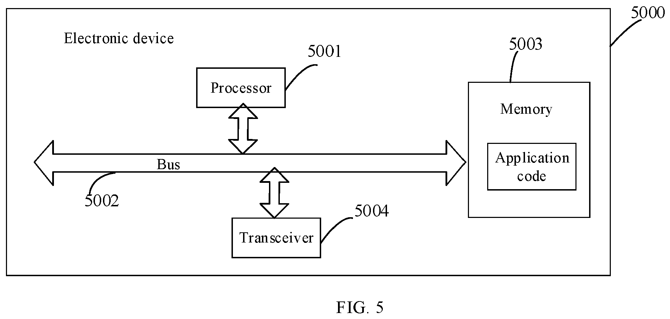

In an optional embodiment, the embodiment of the disclosure also provides an electronic device. As illustrated in FIG. 5, the electronic device 5000 shown in FIG. 5 includes: a processor 5001 and a memory 5003. The processor 5001 is connected to the memory 5003, for example, via a bus 5002. Optionally, the electronic device 5000 may also include a transceiver 5004. It should be noted that there may be one or more transceivers 5004 in practical applications, and the structure of the electronic device 5000 does not constitute a limitation of the embodiments of the disclosure.

The memory 5003 is configured to store application codes for executing the solutions of the disclosure, and the execution is controlled by the processor 5001. When the electronic device 5000 acts as an AP, the processor 5001 is used to execute the application codes stored in the memory 5003 to realize the communication method applied to the AP in the solutions. When the electronic device 5000 acts as a STA, the processor 5001 is used to execute the application codes stored in the memory 5003 to realize the communication method applied to the STA in the solutions.

The bus 5002 may include a pathway to transfer information among the above components. The bus 5002 may be a Peripheral Component Interconnect (PCI) bus or an Extended Industry Standard Architecture (EISA) bus. The bus 5002 can be categorized as an address bus, a data bus, a control bus, and the like. For ease of representation, the bus 5002 is represented by only one thick line in FIG. 5, but it does not indicate that there is only one bus or one type of bus.

The memory 5003 may be a Read Only Memory (ROM) or other types of static storage devices for storing static information and instructions, a Random Access Memory (RAM) or other types of dynamic storage devices for storing information and instructions, an Electrically Erasable Programmable Read Only Memory (EEPROM), a Compact Disc Read Only Memory (CD-ROM) or other optical disc memories, optical disk memories (including compact disc, laser disc, CD-ROM, digital general disc, and Blu-ray disc), disk storage mediums or other magnetic storage devices, or any other mediums that can be used to carry or store desirable program codes in the form of instructions or data structures and can be accessed by a computer, which is not limited herein.

The embodiments of the disclosure provide a computer-readable storage medium having a computer program stored thereon. When the computer program is executed by a computer, the computer is caused to execute the corresponding contents of the foregoing method embodiments.

It should be understood that although various steps in the flowcharts of the accompanying drawings are shown in sequence as indicated by arrows, these steps are not necessarily performed in the order indicated by the arrows. Unless explicitly stated in this article, the execution of these steps is not strictly limited in order, and they can be performed in any other order. Moreover, at least some of the steps in the flowchart of the accompanying drawings may include multiple sub-steps or multiple stages. These sub-steps or stages are not necessarily executed at the same time, but may be executed at different times, and the order of the execution is not necessarily sequential, but may be executed in turn or alternately with other steps or at least a portion of sub-steps or stages of other steps.

It is noted that the computer-readable storage medium described above in the disclosure may be a computer-readable signal medium, a computer-readable storage medium or any combination thereof. The computer-readable storage medium may include, but is not limited to, an electrical, magnetic, optical, electromagnetic, infrared, or semiconducting system, apparatus or device, or any combination thereof. More specific examples of the computer-readable storage medium may include, but are not limited to, electrical connections having one or more wires, portable computer disks, hard disks, RAMs, ROMs, EPROMs or flash memories, optical fibers, portable CD-ROMs, optical storage devices, magnetic memory devices, or any suitable combination thereof. In the disclosure, the computer-readable storage medium may be any tangible medium containing or storing programs that may be used by or in combination with an instruction execution system, apparatus or device. In the disclosure, the computer-readable signal medium may include a data signal propagated in a baseband or as part of a carrier that carries computer-readable program codes. The propagated data signal may take a variety of forms, which includes, but is not limited to, an electromagnetic signal, an optical signal, or any suitable combination thereof. The computer-readable signal medium may also be any computer-readable storage mediums other than the computer-readable storage medium. The computer-readable signal medium may send, propagate, or transmit a program that can be used by or in combination with an instruction execution system, apparatus or device. The program code stored on the computer-readable storage medium may be transmitted using any suitable medium, which includes, but is not limited to: wire, fiber optic cable, Radio Frequency (RF), or any suitable combination thereof.

The above computer-readable storage medium may be contained in the above WLAN initiating device or responding device or exist independently rather than being assembled into the above WLAN initiating device or responding device.

The computer-readable storage medium carries one or more programs. When the one or more programs are executed by the AP or the STA, the AP or the STA is caused to implement the corresponding communication method.

According to an aspect of the disclosure, a computer program product or a computer program is provided. The computer program product or the computer program includes computer instructions stored in a computer-readable storage medium. The processor of the computer device reads the computer instructions from the computer-readable storage medium, and executes the computer instructions to cause the computer device to implement the communication method provided in the above optional implementations.

The computer program codes for performing the operations of the disclosure may be written in one or more programming languages or any combination thereof. The above programming languages include object-oriented programming languages, such as Java, Smalltalk, and C++, and conventional procedural programming languages, such as "C" programming language or similar programming languages. The program code may be executed entirely on a user computer, executed partially on the user computer, executed as a stand-alone software package, executed partially on the user computer and partially on a remote computer, or executed entirely on the remote computer or on a server. In the case involving the remote computer, the remote computer may be connected to the user computer via any type of network, including a Local Area Network (LAN) or a Wide Area Network (WAN), or it may be connected to an external computer (e.g., via the Internet through an Internet service provider).

The flowcharts and block diagrams in the accompanying drawings illustrate optional architectures, functions and operations that may be implemented by the systems, methods and computer program products according to the embodiments of the disclosure. At this point, each frame in the flowcharts or block diagrams may represent a module, a program segment, or a portion of codes, which includes one or more executable instructions for implementing a specified logical function. It should also be noted that in some implementations as replacements, the functions labeled in the frames may also be implemented in a different order than those labeled in the accompanying drawings. For example, two consecutively represented boxes may actually be executed substantially in parallel, or they may sometimes be executed in a reverse order, depending on the function involved. It should also be noted that each of the frames in the block diagrams and/or flowcharts, and any combination of frames in the block diagrams and/or flowcharts, may be implemented with a specialized hardware-based system that performs the specified function or operation, or may be implemented with a combination of specialized hardware and computer instructions.

The modules described in the embodiments of the disclosure may be realized through software or hardware. The module name does not constitute a limitation on the module itself in a certain case. For example, module A may also be described as "module A for p erforming an operation B".

The above description is only preferred embodiments of the disclosure and an explanation of the technical principles utilized.

## Claims

1. A communication method, applied to an access point, AP, the method comprising:
determining (S11) a first physical layer protocol data unit, PPDU, for transmitting non-low-latency service data in a case that there is a need for transmitting low-latency service data during a process of transmitting the non-low-latency service data within a transmission opportunity, TXOP, wherein the first PPDU comprises a first identification bit, and the first identification bit is used to indicate that a PPDU for transmitting the low-latency service data is sent after sending the first PPDU within the TXOP;
sending (S12) the first PPDU;
and
sending consecutively at least one second PPDU after sending the first PPDU within the TXOP, wherein each second PPDU is used for transmitting the low-latency service data.

2. The method of claim 1, wherein each second PPDU comprises a second identification bit, and the second identification bit of each second PPDU except the last one of the at least one second PPDU indicates, by a first value, that a next second PPDU is used for transmitting the low-latency service data, and the second identification bit of the last one of the at least one second PPDU indicates, by a second value, that no PPDU for transmitting the low-latency service data is sent within the TXOP; or
wherein a sequence number of each second PPDU except the first one of the at least one second PPDU is a sequence number of a previous second PPDU plus 1, and a sequence number of the first one of the at least one second PPDU is 1; or
wherein the last one of the at least one second PPDU further comprises a third identification bit, the third identification bit indicates, by a third value, that a PPDU for transmitting the non-low-latency service data is sent after sending the last one of the at least one second PPDU, or the third identification bit indicates, by a fourth value, that no PPDU for transmitting service data is sent after sending the last one of the at least one second PPDU within the TXOP; or
wherein each second PPDU comprises a fourth identification bit, each fourth identification bit is used to indicate a remaining transmission time for the low-latency service data, and the remaining transmission time indicated by each fourth identification bit comprises a transmission time of all second PPDUs starting from a corresponding second PPDU and a transmission time of acknowledgement, ACK, frames corresponding to the all second PPDUs starting from the corresponding second PPDU, or the remaining transmission time comprises a transmission time of all second PPDUs starting from a corresponding second PPDU and a transmission time of block acknowledgement, BA, frames corresponding to the all second PPDUs.

3. The method of claim 2, wherein in case that each second PPDU comprises the second identification bit or in case that the last one of the at least one second PPDU further comprises the third identification bit, the first identification bit, the second identification bit and the third identification bit are located in a physical layer preamble or a medium access control, MAC, header, and the second identification bit is located in a more data field in a case that the second identification bit is located in the MAC header.

4. The method of claim 2 or 3, wherein in case that each second PPDU comprises the fourth identification bit, the fourth identification bit is a duration field in a MAC header.

5. The method of any one of claims 2 to 4, wherein in case that the last one of the at least one second PPDU further comprises the third identification bit, a sequence number of the first one of PPDUs for transmitting the non-low-latency service data sent after the last one of the at least one second PPDU is a sequence number of the first PPDU plus 1.

6. A communication method, applied to a station, STA, the method comprising:
determining (S21) a third physical layer protocol data unit, PPDU, for transmitting non-low-latency service data in a case that there is a need for transmitting low-latency service data during a process of transmitting the non-low-latency service data within a transmission opportunity, TXOP, wherein the third PPDU comprises a fifth identification bit, and the fifth identification bit is used to indicate that a PPDU for transmitting the low-latency service data is sent after sending the third PPDU within the TXOP;
sending (S22) the third PPDU;
and
sending consecutively at least one fourth PPDU after sending the third PPDU within the TXOP, wherein each fourth PPDU is used for transmitting the low-latency service data.

7. The method of claim 6, wherein each fourth PPDU comprises a sixth identification bit, and the sixth identification bit of each fourth PPDU except the last one of the at least one fourth PPDU indicates, by a fifth value, that a next fourth PPDU is used for transmitting the low-latency service data, and the sixth identification bit of the last one of the at least one fourth PPDU indicates, by a sixth value, that no PPDU for transmitting the low-latency service data is sent within the TXOP; or
wherein a sequence number of each fourth PPDU except the first one of the at least one fourth PPDU is a sequence number of a previous fourth PPDU plus 1, and a sequence number of the first one of the at least one fourth PPDU is 1; or
wherein the last one of the at least one fourth PPDU further comprises a seventh identification bit, the seventh identification bit indicates, by a seventh value, that a PPDU for transmitting the non-low-latency service data is sent after sending the last one of the at least one fourth PPDU, or the seventh identification bit indicates, by an eighth value, that no PPDU for transmitting service data is sent after sending the last one of the at least one fourth PPDU within the TXOP; or
wherein each fourth PPDU comprises an eighth identification bit, each eighth identification bit is used to indicate a remaining transmission time for the low-latency service data, and the remaining transmission time indicated by each eighth identification bit comprises a transmission time of all fourth PPDUs starting from a corresponding fourth PPDU and a transmission time of acknowledgement, ACK, frames corresponding to the all fourth PPDUs starting from the corresponding fourth PPDU, or the remaining transmission time comprises a transmission time of all fourth PPDUs starting from the corresponding fourth PPDU and a transmission time of block acknowledgement, BA, frames corresponding to the all fourth PPDUs.

8. The method of claim 7, wherein in case that each fourth PPDU comprises the sixth identification bit or in case that the last one of the at least one fourth PPDU further comprises the seventh identification bit, the fifth identification bit, the sixth identification bit and the seventh identification bit are located in a physical layer preamble or a medium access control, MAC, header, and the sixth identification bit is located in a more data field in a case that the sixth identification bit is located in the MAC header.

9. The method of claim 7 or 8, wherein in case that each fourth PPDU comprises the eighth identification bit, the eighth identification bit is a duration field in a MAC header.

10. The method of any one of claims 7 to 9, wherein in case that the last one of the at least one fourth PPDU further comprises the seventh identification bit, a sequence number of the first one of PPDUs for transmitting the non-low-latency service data sent after the last one of the at least one fourth PPDU is a sequence number of the third PPDU plus 1.

11. A communication apparatus, comprising:
a first determining module (31), configured to determine a first physical layer protocol data unit, PPDU, for transmitting non-low-latency service data in a case that there is a need for transmitting low-latency service data during a process of transmitting the non-low-latency service data within a transmission opportunity, TXOP, wherein the first PPDU comprises a first identification bit, and the first identification bit is used to indicate that a PPDU for transmitting the low-latency service data is sent after sending the first PPDU within the TXOP; and
a first transceiver module (32), configured to send the first PPDU;
the first transceiver module (32) further configured to send consecutively at least one second PPDU after sending the first PPDU within the TXOP, wherein each second PPDU is used for transmitting the low-latency service data.

12. A communication apparatus, comprising:
a second determining module (41), configured to determine a third physical layer protocol data unit (PPDU) for transmitting non-low-latency service data in a case that there is a need for transmitting low-latency service data during a process of transmitting the non-low-latency service data within a transmission opportunity, TXOP, wherein the third PPDU comprises a fifth identification bit, and the fifth identification bit is used to indicate that a PPDU for transmitting the low-latency service data is sent after sending the third PPDU within the TXOP; and
a second transceiver module (42), configured to send the third PPDU;
the second transceiver module (42) further configured to send consecutively at least one second PPDU after sending the first PPDU within the TXOP, wherein each second PPDU is used for transmitting the low-latency service data.

13. A computer-readable storage medium, wherein the computer-readable storage medium stores a computer program, wherein the computer program comprising instructions to cause an access point to execute the steps of method claims 1-5 or wherein the computer program comprising instructions to cause a station to execute the method steps of claims 6-10.

## Patentansprüche

1. Ein Kommunikationsverfahren, das auf einen Zugriffspunkt (AP) angewendet wird, wobei das Verfahren Folgendes umfasst:
Bestimmen (S11) einer ersten Protokoll-Dateneinheit einer physischen Schicht (PPDU) zum Übertragen von Dienstdaten ohne niedrige Latenz in einem Fall, in dem während eines Prozesses des Übertragens der Dienstdaten ohne niedrige Latenz innerhalb einer Übertragungsgelegenheit (TXOP) ein Bedarf an der Übertragung von Dienstdaten mit niedriger Latenz besteht, wobei die erste PPDU ein erstes Identifikationsbit umfasst und das erste Identifikationsbit dazu verwendet wird, anzuzeigen, dass nach dem Senden der ersten PPDU innerhalb der TXOP eine PPDU zum Übertragen der Dienstdaten mit niedriger Latenz gesendet wird;
Senden (S12) der ersten PPDU;
und
aufeinanderfolgendes Senden von mindestens einer zweiten PPDU nach dem Senden der ersten PPDU innerhalb der TXOP, wobei jede zweite PPDU zum Übertragen der Dienstdaten mit niedriger Latenz verwendet wird.

2. Das Verfahren nach Anspruch 1, wobei jede zweite PPDU ein zweites Identifikationsbit umfasst und das zweite Identifikationsbit jeder zweiten PPDU mit Ausnahme der letzten der mindestens einen zweiten PPDUs durch einen ersten Wert anzeigt, dass eine nächste zweite PPDU zum Übertragen der Dienstdaten mit niedriger Latenz verwendet wird, und das zweite Identifikationsbit der letzten der mindestens einen zweiten PPDUs durch einen zweiten Wert anzeigt, dass innerhalb der TXOP keine PPDU zum Übertragen der Dienstdaten mit niedriger Latenz gesendet wird; oder
wobei eine Sequenznummer jeder zweiten PPDU mit Ausnahme der ersten der mindestens einen zweiten PPDUs eine Sequenznummer einer vorherigen zweiten PPDU plus 1 ist und eine Sequenznummer der ersten der mindestens einen zweiten PPDUs 1 ist; oder
wobei die letzte der mindestens einen zweiten PPDUs ferner ein drittes Identifikationsbit umfasst, wobei das dritte Identifikationsbit durch einen dritten Wert anzeigt, dass nach dem Senden der letzten der mindestens einen zweiten PPDUs eine PPDU zum Übertragen der Dienstdaten ohne niedrige Latenz gesendet wird, oder wobei das dritte Identifikationsbit durch einen vierten Wert anzeigt, dass nach dem Senden der letzten der mindestens einen zweiten PPDUs innerhalb der TXOP keine PPDU zum Übertragen von Dienstdaten gesendet wird; oder
wobei jede zweite PPDU ein viertes Identifikationsbit umfasst, wobei jedes vierte Identifikationsbit dazu verwendet wird, eine verbleibende Übertragungszeit für die Dienstdaten mit niedriger Latenz anzuzeigen, wobei die durch jedes vierte Identifikationsbit angezeigte verbleibende Übertragungszeit eine Übertragungszeit aller zweiten PPDUs beginnend bei einer entsprechenden zweiten PPDU und eine Übertragungszeit von Bestätigungsrahmen (ACK-Rahmen), die sämtlichen zweiten PPDUs beginnend bei der entsprechenden zweiten PPDU entsprechen, umfasst, oder wobei die verbleibende Übertragungszeit eine Übertragungszeit aller zweiten PPDUs beginnend bei einer entsprechenden zweiten PPDU und eine Übertragungszeit von Block-Bestätigungsrahmen (BA-Rahmen), die sämtlichen zweiten PPDUs entsprechen, umfasst.

3. Das Verfahren nach Anspruch 2, wobei in einem Fall, in dem jede zweite PPDU das zweite Identifikationsbit umfasst, oder in einem Fall, in dem die letzte der mindestens einen zweiten PPDUs ferner das dritte Identifikationsbit umfasst, das erste Identifikationsbit, das zweite Identifikationsbit und das dritte Identifikationsbit in einer Präambel der physischen Schicht oder in einem Header einer Medienzugriffssteuerung (MAC) angeordnet sind und das zweite Identifikationsbit in einem Fall, in dem es in dem MAC-Header angeordnet ist, in einem More-Data-Feld bzw. Mehrdatenfeld angeordnet ist.

4. Das Verfahren nach Anspruch 2 oder 3, wobei in einem Fall, in dem jede zweite PPDU das vierte Identifikationsbit umfasst, das vierte Identifikationsbit ein Dauerfeld in einem MAC-Header ist.

5. Das Verfahren nach einem der Ansprüche 2 bis 4, wobei in einem Fall, in dem die letzte der mindestens einen zweiten PPDUs ferner das dritte Identifikationsbit umfasst, eine Sequenznummer der ersten der PPDUs zum Übertragen der Dienstdaten ohne niedrige Latenz, die nach der letzten der mindestens einen zweiten PPDUs gesendet werden, eine Sequenznummer der ersten PPDU plus 1 ist.

6. Ein Kommunikationsverfahren, das auf eine Station (STA) angewendet wird, wobei das Verfahren Folgendes umfasst:
Bestimmen (S21) einer dritten Protokoll-Dateneinheit der physischen Schicht (PPDU) zum Übertragen von Dienstdaten ohne niedrige Latenz in einem Fall, in dem während eines Prozesses des Übertragens der Dienstdaten ohne niedrige Latenz innerhalb einer Übertragungsgelegenheit (TXOP) ein Bedarf an der Übertragung von Dienstdaten mit niedriger Latenz besteht, wobei die dritte PPDU ein fünftes Identifikationsbit umfasst und das fünfte Identifikationsbit dazu verwendet wird, anzuzeigen, dass nach dem Senden der dritten PPDU innerhalb der TXOP eine PPDU zum Übertragen der Dienstdaten mit niedriger Latenz gesendet wird;
Senden (S22) der dritten PPDU;
und
aufeinanderfolgendes Senden von mindestens einer vierten PPDU nach dem Senden der dritten PPDU innerhalb der TXOP, wobei jede vierte PPDU zum Übertragen der Dienstdaten mit niedriger Latenz verwendet wird.

7. Das Verfahren nach Anspruch 6, wobei jede vierte PPDU ein sechstes Identifikationsbit umfasst und das sechste Identifikationsbit jeder vierten PPDU mit Ausnahme der letzten der mindestens einen vierten PPDUs durch einen fünften Wert anzeigt, dass eine nächste vierte PPDU zum Übertragen der Dienstdaten mit niedriger Latenz verwendet wird, und das sechste Identifikationsbit der letzten der mindestens einen vierten PPDUs durch einen sechsten Wert anzeigt, dass innerhalb der TXOP keine PPDU zum Übertragen der Dienstdaten mit niedriger Latenz gesendet wird; oder
wobei eine Sequenznummer jeder vierten PPDU mit Ausnahme der ersten der mindestens einen vierten PPDUs eine Sequenznummer einer vorherigen vierten PPDU plus 1 ist und eine Sequenznummer der ersten der mindestens einen vierten PPDUs 1 ist; oder
wobei die letzte der mindestens einen vierten PPDUs ferner ein siebtes Identifikationsbit umfasst, wobei das siebte Identifikationsbit durch einen siebten Wert anzeigt, dass nach dem Senden der letzten der mindestens einen vierten PPDUs eine PPDU zum Übertragen der Dienstdaten ohne niedrige Latenz gesendet wird, oder wobei das siebte Identifikationsbit durch einen achten Wert anzeigt, dass nach dem Senden der letzten der mindestens einen vierten PPDUs innerhalb der TXOP keine PPDU zum Übertragen von Dienstdaten gesendet wird; oder
wobei jede vierte PPDU ein achtes Identifikationsbit umfasst, wobei jedes achte Identifikationsbit dazu verwendet wird, eine verbleibende Übertragungszeit für die Dienstdaten mit niedriger Latenz anzuzeigen, wobei die durch jedes achte Identifikationsbit angezeigte verbleibende Übertragungszeit eine Übertragungszeit aller vierten PPDUs beginnend bei einer entsprechenden vierten PPDU und eine Übertragungszeit von Bestätigungsrahmen (ACK-Rahmen), die sämtlichen vierten PPDUs beginnend bei der entsprechenden vierten PPDU entsprechen, umfasst, oder wobei die verbleibende Übertragungszeit eine Übertragungszeit aller vierten PPDUs beginnend bei einer entsprechenden vierten PPDU und eine Übertragungszeit von Block-Bestätigungsrahmen (BA-Rahmen), die sämtlichen vierten PPDUs entsprechen, umfasst.

8. Das Verfahren nach Anspruch 7, wobei in einem Fall, in dem jede vierte PPDU das sechste Identifikationsbit umfasst, oder in einem Fall, in dem die letzte der mindestens einen vierten PPDUs ferner das siebte Identifikationsbit umfasst, das fünfte Identifikationsbit, das sechste Identifikationsbit und das siebte Identifikationsbit in einer Präambel der physischen Schicht oder in einem Header einer Medienzugriffssteuerung (MAC) angeordnet sind und das sechste Identifikationsbit in einem Fall, in dem es in dem MAC-Header angeordnet ist, in einem More-Data-Feld bzw. Mehrdatenfeld angeordnet ist.

9. Das Verfahren nach Anspruch 7 oder 8, wobei in einem Fall, in dem jede vierte PPDU das achte Identifikationsbit umfasst, das achte Identifikationsbit ein Dauerfeld in einem MAC-Header ist.

10. Das Verfahren nach einem der Ansprüche 7 bis 9, wobei in einem Fall, in dem die letzte der mindestens einen vierten PPDUs ferner das siebte Identifikationsbit umfasst, eine Sequenznummer der ersten der PPDUs zum Übertragen der Dienstdaten ohne niedrige Latenz, die nach der letzten der mindestens einen vierten PPDUs gesendet werden, eine Sequenznummer der dritten PPDU plus 1 ist.

11. Eine Kommunikationsvorrichtung, umfassend:
ein erstes Bestimmungsmodul (31), konfiguriert zum Bestimmen einer ersten Protokoll-Dateneinheit der physischen Schicht (PPDU) zum Übertragen von Dienstdaten ohne niedrige Latenz in einem Fall, in dem während eines Prozesses des Übertragens der Dienstdaten ohne niedrige Latenz innerhalb einer Übertragungsgelegenheit (TXOP) ein Bedarf an der Übertragung von Dienstdaten mit niedriger Latenz besteht, wobei die erste PPDU ein erstes Identifikationsbit umfasst und das erste Identifikationsbit dazu verwendet wird, anzuzeigen, dass nach dem Senden der ersten PPDU innerhalb der TXOP eine PPDU zum Übertragen der Dienstdaten mit niedriger Latenz gesendet wird; und
ein erstes Sende-Empfangs-Modul (32), konfiguriert zum Senden der ersten PPDU;
wobei das erste Sende-Empfangs-Modul (32) ferner konfiguriert ist, nach dem Senden der ersten PPDU innerhalb der TXOP mindestens eine zweite PPDU aufeinanderfolgend zu senden, wobei jede zweite PPDU zum Übertragen der Dienstdaten mit niedriger Latenz verwendet wird.

12. Eine Kommunikationsvorrichtung, umfassend:
ein zweites Bestimmungsmodul (41), konfiguriert zum Bestimmen einer dritten Protokoll-Dateneinheit der physischen Schicht (PPDU) zum Übertragen von Dienstdaten ohne niedrige Latenz in einem Fall, in dem während eines Prozesses des Übertragens der Dienstdaten ohne niedriger Latenz innerhalb einer Übertragungsgelegenheit (TXOP) ein Bedarf an der Übertragung von Dienstdaten mit niedriger Latenz besteht, wobei die dritte PPDU ein fünftes Identifikationsbit umfasst und das fünfte Identifikationsbit dazu verwendet wird, anzuzeigen, dass nach dem Senden der dritten PPDU innerhalb der TXOP eine PPDU zum Übertragen der Dienstdaten mit niedriger Latenz gesendet wird; und
ein zweites Sende-Empfangs-Modul (42), konfiguriert zum Senden der dritten PPDU;
wobei das zweite Sende-Empfangs-Modul (42) ferner konfiguriert ist, nach dem Senden der dritten PPDU innerhalb der TXOP mindestens eine zweite PPDU aufeinanderfolgend zu senden, wobei jede zweite PPDU zum Übertragen der Dienstdaten mit niedriger Latenz verwendet wird.

13. Ein computerlesbares Speichermedium, wobei das computerlesbare Speichermedium ein Computerprogramm speichert, wobei das Computerprogramm Anweisungen umfasst, die einen Zugriffspunkt (AP) veranlassen, die Schritte des Verfahrens nach einem der Ansprüche 1 bis 5 auszuführen, oder wobei das Computerprogramm Anweisungen umfasst, die eine Station (STA) veranlassen, die Verfahrensschritte nach dem Verfahren eines der Ansprüche 6 bis 10 auszuführen.

## Revendications

1. Un procédé de communication appliqué à un point d'accès (AP), le procédé comprenant :
la détermination (S11) d'une première unité de données de protocole de couche physique (PPDU) pour transmettre des données de service à latence non faible dans un cas où il existe un besoin de transmettre des données de service à faible latence pendant un processus de transmission des données de service à latence non faible au sein d'une opportunité de transmission (TXOP), dans lequel la première PPDU comprend un premier bit d'identification et le premier bit d'identification est utilisé pour indiquer qu'une PPDU pour transmettre les données de service à faible latence est envoyée après l'envoi de la première PPDU au sein de la TXOP ;
l'envoi (S12) de la première PPDU ;
et
l'envoi consécutif d'au moins une deuxième PPDU après l'envoi de la première PPDU au sein de la TXOP, dans lequel chaque deuxième PPDU est utilisée pour transmettre les données de service à faible latence.

2. Le procédé de la revendication 1, dans lequel chaque deuxième PPDU comprend un deuxième bit d'identification et le deuxième bit d'identification de chaque deuxième PPDU, à l'exception de la dernière des au moins une deuxième PPDU, indique, par une première valeur, qu'une deuxième PPDU suivante est utilisée pour transmettre les données de service à faible latence, et le deuxième bit d'identification de la dernière des au moins une deuxième PPDU indique, par une deuxième valeur, qu'aucune PPDU pour transmettre les données de service à faible latence n'est envoyée au sein de la TXOP ; ou
dans lequel un numéro de séquence de chaque deuxième PPDU, à l'exception de la première des au moins une deuxième PPDU, est un numéro de séquence d'une deuxième PPDU précédente plus 1, et un numéro de séquence de la première des au moins une deuxième PPDU est 1 ; ou
dans lequel la dernière des au moins une deuxième PPDU comprend en outre un troisième bit d'identification, le troisième bit d'identification indique, par une troisième valeur, qu'une PPDU pour transmettre les données de service à latence non faible est envoyée après l'envoi de la dernière des au moins une deuxième PPDU, ou le troisième bit d'identification indique, par une quatrième valeur, qu'aucune PPDU pour transmettre des données de service n'est envoyée après l'envoi de la dernière des au moins une deuxième PPDU au sein de la TXOP ; ou
dans lequel chaque deuxième PPDU comprend un quatrième bit d'identification, chaque quatrième bit d'identification est utilisé pour indiquer un temps de transmission restant pour les données de service à faible latence, et le temps de transmission restant indiqué par chaque quatrième bit d'identification comprend un temps de transmission de toutes les deuxièmes PPDU à partir d'une deuxième PPDU correspondante et un temps de transmission de trames d'accusé de réception (trames ACK) correspondant à toutes les deuxièmes PPDU à partir de la deuxième PPDU correspondante, ou le temps de transmission restant comprend un temps de transmission de toutes les deuxièmes PPDU à partir d'une deuxième PPDU correspondante et un temps de transmission de trames d'accusé de réception groupé (trames BA) correspondant à toutes les deuxièmes PPDU.

3. Le procédé de la revendication 2, dans lequel dans un cas où chaque deuxième PPDU comprend le deuxième bit d'identification ou dans un cas où la dernière des au moins une deuxième PPDU comprend en outre le troisième bit d'identification, le premier bit d'identification, le deuxième bit d'identification et le troisième bit d'identification sont situés dans un préambule de couche physique ou dans un en-tête de contrôle d'accès au support (MAC), et le deuxième bit d'identification est situé dans un champ « more data » dans un cas où le deuxième bit d'identification est situé dans l'en-tête MAC.

4. Le procédé de la revendication 2 ou 3, dans lequel dans un cas où chaque deuxième PPDU comprend le quatrième bit d'identification, le quatrième bit d'identification est un champ de durée dans un en-tête MAC.

5. Le procédé de l'une quelconque des revendications 2 à 4, dans lequel dans un cas où la dernière des au moins une deuxième PPDU comprend en outre le troisième bit d'identification, un numéro de séquence de la première des PPDU pour transmettre les données de service à latence non faible envoyées après la dernière des au moins une deuxième PPDU est un numéro de séquence de la première PPDU plus 1.

6. Un procédé de communication appliqué à une station (STA), le procédé comprenant :
la détermination (S21) d'une troisième unité de données de protocole de couche physique (PPDU) pour transmettre des données de service à latence non faible dans un cas où il existe un besoin de transmettre des données de service à faible latence pendant un processus de transmission des données de service à latence non faible au sein d'une opportunité de transmission (TXOP), dans lequel la troisième PPDU comprend un cinquième bit d'identification et le cinquième bit d'identification est utilisé pour indiquer qu'une PPDU pour transmettre les données de service à faible latence est envoyée après l'envoi de la troisième PPDU au sein de la TXOP ;
l'envoi (S22) de la troisième PPDU ;
et
l'envoi consécutif d'au moins une quatrième PPDU après l'envoi de la troisième PPDU au sein de la TXOP, dans lequel chaque quatrième PPDU est utilisée pour transmettre les données de service à faible latence.

7. Le procédé de la revendication 6, dans lequel chaque quatrième PPDU comprend un sixième bit d'identification et le sixième bit d'identification de chaque quatrième PPDU, à l'exception de la dernière des au moins une quatrième PPDU, indique, par une cinquième valeur, qu'une quatrième PPDU suivante est utilisée pour transmettre les données de service à faible latence, et le sixième bit d'identification de la dernière des au moins une quatrième PPDU indique, par une sixième valeur, qu'aucune PPDU pour transmettre les données de service à faible latence n'est envoyée au sein de la TXOP ; ou
dans lequel un numéro de séquence de chaque quatrième PPDU, à l'exception de la première des au moins une quatrième PPDU, est un numéro de séquence d'une quatrième PPDU précédente plus 1, et un numéro de séquence de la première des au moins une quatrième PPDU est 1 ; ou
dans lequel la dernière des au moins une quatrième PPDU comprend en outre un septième bit d'identification, le septième bit d'identification indique, par une septième valeur, qu'une PPDU pour transmettre les données de service à latence non faible est envoyée après l'envoi de la dernière des au moins une quatrième PPDU, ou le septième bit d'identification indique, par une huitième valeur, qu'aucune PPDU pour transmettre des données de service n'est envoyée après l'envoi de la dernière des au moins une quatrième PPDU au sein de la TXOP ; ou
dans lequel chaque quatrième PPDU comprend un huitième bit d'identification, chaque huitième bit d'identification est utilisé pour indiquer un temps de transmission restant pour les données de service à faible latence, et le temps de transmission restant indiqué par chaque huitième bit d'identification comprend un temps de transmission de toutes les quatrièmes PPDU à partir d'une quatrième PPDU correspondante et un temps de transmission de trames d'accusé de réception (trames ACK) correspondant à toutes les quatrièmes PPDU à partir de la quatrième PPDU correspondante, ou le temps de transmission restant comprend un temps de transmission de toutes les quatrièmes PPDU à partir d'une quatrième PPDU correspondante et un temps de transmission de trames d'accusé de réception groupé (trames BA) correspondant à toutes les quatrièmes PPDU.

8. Le procédé de la revendication 7, dans lequel dans un cas où chaque quatrième PPDU comprend le sixième bit d'identification ou dans un cas où la dernière des au moins une quatrième PPDU comprend en outre le septième bit d'identification, le cinquième bit d'identification, le sixième bit d'identification et le septième bit d'identification sont situés dans un préambule de couche physique ou dans un en-tête de contrôle d'accès au support (MAC), et le sixième bit d'identification est situé dans un champ « more data » dans un cas où le sixième bit d'identification est situé dans l'en-tête MAC.

9. Le procédé de la revendication 7 ou 8, dans lequel dans un cas où chaque quatrième PPDU comprend le huitième bit d'identification, le huitième bit d'identification est un champ de durée dans un en-tête MAC.

10. Le procédé de l'une quelconque des revendications 7 à 9, dans lequel dans un cas où la dernière des au moins une quatrième PPDU comprend en outre le septième bit d'identification, un numéro de séquence de la première des PPDU pour transmettre les données de service à latence non faible envoyées après la dernière des au moins une quatrième PPDU est un numéro de séquence de la troisième PPDU plus 1.

11. Un appareil de communication comprenant :
un premier module de détermination (31), configuré pour déterminer une première unité de données de protocole de couche physique (PPDU) pour transmettre des données de service à latence non faible dans un cas où il existe un besoin de transmettre des données de service à faible latence pendant un processus de transmission des données de service à latence non faible au sein d'une opportunité de transmission (TXOP), dans lequel la première PPDU comprend un premier bit d'identification et le premier bit d'identification est utilisé pour indiquer qu'une PPDU pour transmettre les données de service à faible latence est envoyée après l'envoi de la première PPDU au sein de la TXOP ; et
un premier module émetteur-récepteur (32), configuré pour envoyer la première PPDU ;
le premier module émetteur-récepteur (32) étant en outre configuré pour envoyer consécutivement au moins une deuxième PPDU après l'envoi de la première PPDU au sein de la TXOP, dans lequel chaque deuxième PPDU est utilisée pour transmettre les données de service à faible latence.

12. Un appareil de communication comprenant :
un deuxième module de détermination (41), configuré pour déterminer une troisième unité de données de protocole de couche physique (PPDU) pour transmettre des données de service à latence non faible dans un cas où il existe un besoin de transmettre des données de service à faible latence pendant un processus de transmission des données de service à latence non faible au sein d'une opportunité de transmission (TXOP), dans lequel la troisième PPDU comprend un cinquième bit d'identification et le cinquième bit d'identification est utilisé pour indiquer qu'une PPDU pour transmettre les données de service à faible latence est envoyée après l'envoi de la troisième PPDU au sein de la TXOP ; et
un deuxième module émetteur-récepteur (42), configuré pour envoyer la troisième PPDU ;
le deuxième module émetteur-récepteur (42) étant en outre configuré pour envoyer consécutivement au moins une deuxième PPDU après l'envoi de la première PPDU au sein de la TXOP, dans lequel chaque deuxième PPDU est utilisée pour transmettre les données de service à faible latence.

13. Un support de stockage lisible par ordinateur, dans lequel le support de stockage lisible par ordinateur stocke un programme informatique, dans lequel le programme informatique comprend des instructions pour amener un point d'accès (AP) à exécuter les étapes du procédé des revendications 1 à 5, ou dans lequel le programme informatique comprend des instructions pour amener une station (STA) à exécuter les étapes du procédé des revendications 6 à 10.
